Europäisches Patentamt

European Patent Office

Office européen des brevets

(19)

(11) Veröffentlichungsnummer: **0 191 423**
**B1**

(12) **EUROPÄISCHE PATENTSCHRIFT**

(45) Veröffentlichungstag der Patentschrift: **16.05.90**

(21) Anmeldenummer: **86101566.7**

(22) Anmeldetag: **06.02.86**

(51) Int. Cl.$^5$: **D 06 F 43/08**, **B 01 D 35/18**,
**B 01 D 29/68**, **B 01 D 36/00**

(54) Reinigungsmaschine zum chemischen Reinigen von Gegenständen aus Stoff.

(30) Priorität: **14.02.85 DE 3505030**
**19.06.85 DE 3521852**

(43) Veröffentlichungstag der Anmeldung:
**20.08.86 Patentblatt 86/34**

(45) Bekanntmachung des Hinweises auf die
Patenterteilung:
**16.05.90 Patentblatt 90/20**

(84) Benannte Vertragsstaaten:
**AT BE CH DE FR GB IT LI LU NL SE**

(56) Entgegenhaltungen:
EP-A-0 082 443
FR-A-2 077 063
FR-A-2 281 148
US-A-2 301 803
US-A-2 310 587
US-A-2 954 873
US-A-3 110 170
US-A-3 232 081

(73) Patentinhaber: **Jost, Walter**
**Quittenweg 17**
**D-7300 Esslingen (DE)**

(72) Erfinder: **Jost, Walter**
**Quittenweg 17**
**D-7300 Esslingen (DE)**

(74) Vertreter: **Reimold, Otto, Dr. Dipl.-Phys. et al**
**Patentanwälte Dipl.-Ing. R. Magenbauer Dipl.-**
**Phys. Dr. O. Reimold Dipl.-Phys.Dr. H. Vetter**
**Hölderlinweg 58**
**D-7300 Esslingen (DE)**

## Beschreibung

Die Erfindung betrifft eine Reinigungsanlage zum chemischen Reinigen von Gegenständen aus Stoff, beispielsweise Kleider, mit einem beispielsweise von einer drehbaren Trommel gebildeten Behandlungsraum, der an einen eine Lösungsmittel-Fördereinrichtung und eine Schmutzfiltereinrichtung enthaltenden Lösungsmittelkreislauf angeschlossen ist, wobei das Gehäuse der Schmutzfiltereinrichtung einen Eingangsraum mit einem Lösungsmitteleinlaß und einen Ausgangsraum mit einem Lösungsmittelauslaß aufweist und im Strömungsweg dazwischen einen ebene Gestalt aufweisenden Schmutzfilter enthält und wobei zum Trocknen des Filtrats bei abgetrennter Lösungsmittelzufuhr der Schmutzfilter mittels einer Luftfördereinrichtung vom Eingangsraum zum Ausgangsraum mit Luft durchströmbar ist.

Beim Betrieb einer solchen Anlage lagern sich verhältnismäßig schnell Schmutzteilchen an der eingangsseitigen Oberfläche des Schmutzfilters ab, was den Lösungsmitteldurchfluß behindert.

Ferner besteht folgendes Problem: Das am Schmutzfilter anfallende Filtrat ist mit Lösungsmittel getränkt und kann deshalb bei der von Zeit zu Zeit stattfindenden Säuberung des Schmutzfilters oder bei dessen Ersetzen nicht einfach weggeworfen werden. Aus diesem Grunde ist es z. B. aus der DE-OS 32 39 937 bereits bekannt, daß man zu gegebener Zeit von dem nach dem Lösungsmittelkreislauf zum Trocknen der Kleider od. dgl. zu betreibenden Warmluftkreislauf der Anlage Warmluft abzweigt und durch den Schmutzfilter strömen läßt, so daß das in dem sumpfartigen Filtrat oder Filterkuchen noch enthaltene Lösungsmittel in Dampfform mitgenommen und innerhalb des Warmluftkreislaufs der Anlage in einem dort enthaltenen Kondensator wieder kondensiert und somit zurückgewonnen wird. Auf diese Weise wird das vom Schmutzfilter zurückgehaltene Filtrat getrocknet. Eine solche Filtrattrocknung dauert jedoch verhältnismäßig lang, da die Temperatur der Warmluft an die Kleidertrocknung und nicht an das Verdampfen des Lösungsmittels angepaßt ist.

Eine Aufgabe der vorliegenden Erfindung besteht deshalb darin, ein zu schnelles Zusetzen der Schmutzfilteroberseite zu vermeiden und außerdem ein schnelleres Trocknen des Filtrats zu erreichen.

Diese Aufgabe wird erfindungsgemäß dadurch gelöst, daß im Eingangsraum eine Rückspüleinrichtung angeordnet ist, die mindestens einen auf die Schmutzfilteroberseite aufsetzbaren, im aufgesetzten Zustand einen gegen den Eingangsraum dichten und über den Schmutzfilter bewegbaren Rückspülkörper aufweist, der an seiner dem Schmutzfilter zugewandten Unterseite eine Rückspülöffnung aufweist, über die bei strömendem Lösungsmittel sich auf dem Schmutzfilter absetzende Schmutzteilchen abgeführt werden, die über eine mit der Rückspülöffnung verbundene Rückspülleitung in den Lösungsmittelkreislauf zurückgelangen, und daß die Filtereinrichtung eine Heizeinrichtung enthält.

Mit Hilfe dieser Rückspüleinrichtung werden also beim Reinigungsbetrieb der Anlage andauernd die auf die Filteroberseite gelangenden Schmutzteilchen abgeführt, wobei der mindestens eine Rückspülkörper nacheinander immer wieder die ganze Filteroberseite überstreicht. Da diese Schmutzteilchen mit Lösungsmittel getränkt bzw. behaftet sind, kann man sie nicht nach außen ableiten, sondern führt sie in den Lösungsmittelkreislauf zurück. Die Schmutzteilchen bleiben somit zwar im Lösungsmittelkreislauf, die Filteroberfläche wird jedoch im Rahmen des Möglichen freigehalten.

Sicherlich entsteht trotz der Rückspüleinrichtung im Laufe der Zeit ein Filtratsumpf. Der Schmutzfilter muß jedoch wesentlich seltener als bisher gereinigt werden. Dies erfolgt bei der erfindungsgemäßen Anlage mit Hilfe der in der Schmutzfiltereinrichtung enthaltenen Heizeinrichtung, die mit einer auf das Verdampfen des Lösungsmittels abgestimmten Temperatur betrieben werden kann und praktisch unmittelbar auf das Filtrat einwirkt, so daß die zum Trocknen des Filtrats durchgeführte Luft sehr schnell das noch im Filtrat befindliche Lösungsmittel wegführt. Somit erfolgt auch die zur Filterreinigung erforderliche Filtrattrocknung wesentlich schneller und vollständiger als seither. Das trockene Filtrat kann dann weggeworfen werden.

Bei der chemischen Reinigung verwendete Lösungsmittel sind sehr dünnflüssig. Deshalb besteht die Gefahr, daß zwischen der Unterseite des mindestens einen Rückspülkörpers und der Filteroberseite hindurch Lösungsmittel in die Rückspülöffnung gelangt, was das Wegführen der Schmutzteilchen benachteiligen würde. Deshalb ist es günstig, daß an der Unterseite jedes Rückspülkörpers eine die Rückspülöffnung umgebende Dichtung, zweckmäßigerweise ein Dichtring, vorhanden ist, über die der Rückspülkörper auf dem Schmutzfilter aufsitzt.

Damit an der Unterseite des mindestens einen Rückspülkörpers keine Undichtheiten hervorrufenden Verschleißerscheinungen auftreten, wenn man ihn über die Filteroberseite bewegt, ist zweckmäßigerweise vorgesehen, daß der Rückspülkörper um eine rechtwinkelig zur Filterebene stehende Achse drehbar sowie in Achsrichtung heb- und senkbar ist, derart, daß der Rückspülkörper zur Lageveränderung auf dem Schmutzfilter zunächst angehoben, anschließend gedreht und dann wieder abgesenkt wird.

Die Achse kann von einem zentral am Filtergehäuse gelagerten Rückspülrohr gebildet werden, an dem der mindestens eine Rückspülkörper seitlich befestigt ist und dessen Rohrinnenraum mit der Rückspülöffnung verbunden ist, so daß die Schmutzteilchen-Abfuhr über das Rückspülrohr erfolgt. Dieses kann in geeigneter Weise mit der Rückspülleitung verbunden sein.

Eine selbsttätige Schmutzteilchen-Abfuhr erhält man dadurch, daß die Schmutzteilchen durch den im Ausgangsraum herrschenden und durch den Filter hindurch an der Rückspülöffnung wirksamen Lösungsmitteldruck abgeführt werden, zweckmäßigerweise indem eine Drosselstelle im Lösungsmittelauslaß oder anschließend an diesen angeordnet ist.

Der Rückspüleinrichtung kann man noch eine weitere Funktion zuordnen:

Die zur Reinigung des Schmutzfilters erforderliche Wegnahme des getrockneten Filtrats kann ohne Öffnen der Filtereinrichtung dadurch erfolgen, daß die Schmutzfilteroberseite absaugbar ist, zweckmäßigerweise über die Rückspüleinrichtung, von deren Rückspülleitung hierzu eine an eine Saugeinrichtung angeschlossene Saugleitung abzweigt. Das weiter oben geschilderte Rückspülen der Schmutzteilchen erfolgt ja bei umströmendem Lösungsmittel, also beim Betrieb der Anlage, während das Absaugen des getrockneten Filtrats in einer Stillstandszeit, wenn das Lösungsmittel nicht umströmt, erfolgt, so daß die Rückspüleinrichtung die genannte Doppelfunktion übernehmen kann.

Der Schmutzfilter ist bevorzugt eine Filterplatte aus gesintertem Material, zweckmäßigerweise aus gesintertem Metall, wobei zweckmäßigerweise die Porengröße in Strömungsrichtung des Lösungsmittels abnimmt. Ein solches Sintermaterial ist hitzebeständig, so daß der Schmutzfilter durch die von der Heizeinrichtung abgegebene Hitze nicht beschädigt wird. Außerdem kann man eine solche Filterplatte an der Oberseite sehr eben ausbilden, was das dichte Aufliegen des mindestens einen Rückspülkörpers begünstigt. Durch die in Strömungsrichtung abnehmende Porengröße erhält man eine Tiefenfiltration und somit ein größeres wirksames Filtervolumen, da der grobe Schmutz oben und der feine Schmutz weiter unten ausgefiltert wird. Auch das Rückspülen wird durch die sich verändernde porengröße begünstigt.

Zweckmäßigerweise ist im Eingangsraum, also in dem dem Filtrat näheren Raum, eine Heizeinrichtung angeordnet. Je nach den beispielsweise räumlichen Gegebenheiten kann die Heizeinrichtung jedoch auch im Ausgangsraum angeordnet sein. Eine besonders große Heizleistung erhält man, wenn in beiden Räumen eine Heizeinrichtung vorgesehen ist. Diese kann zweckmäßigerweise eine Mikrowellen-Heizeinrichtung sein.

Auch ist es möglich, daß der Schmutzfilter auf einer aufheizbaren Unterlagsplatte aufliegt, die an ihrer dem Filter zugewandten Oberseite Strömungsnuten od.dgl. enthält, die mit einer zum Auslaß hin offenen Ausnehmung der Unterlagsplatte verbunden sind.

Infolge der Heizeinrichtung kann die Schmutzfiltereinrichtung auch noch zu einem anderen Zweck verwendet werden:

Der Schmutzfilter hält sehr fein verteilte oder im Lösungsmittel gelöste Verunreinigungen wie Öle, Fettsäuren usw. nicht zurück. Deshalb wird bei Reinigungsanlagen der in Frage stehenden Art das Lösungsmittel in kürzeren oder längeren Zeitabständen destilliert. Hierzu ist seither ein Destillierkreis vorgesehen, der die Schmutzfiltereinrichtung umgeht und in den von Zeit zu Zeit mittels einer geeigneten Ventilanordnung ein Teil des Lösungsmittels eingeleitet wird. In dem Destillierkreis gelangt diese Lösungsmittelmenge in einen mit einer Heizung versehenen Destillierapparat, in dem das Lösungsmittel verdampft, so daß die von der Schmutzfiltereinrichtung nicht ausgefilterten, im Lösungsmittel noch enthaltenen Verunreinigungen zurückbleiben und eindicken. Ein solcher Destillierapparat erhöht jedoch die Gestehungskosten der Anlage und nimmt außerdem verhältnismäßig viel Platz in Anspruch. Deshalb ist in weiterer Ausgestaltung der Erfindung vorgesehen, daß die Schmutzfiltereinrichtung vom Filterbetrieb, bei dem das Lösungsmittel durchströmt, auf Destillierbetrieb umstellbar und dabei mittels der Heizeinrichtung als Destillierapparat betreibbar ist, wobei das Filtergehäuse den Destillierraum bildet und der Eingangsraum über eine Destillierleitung mit einem Kondensator verbunden ist, in dem der durch die Destillierleitung ankommende Lösungsmitteldampf kondensiert. Anschließend kann man das kondensierte Lösungsmittel, wie an sich bekannt, über einen Wasserabscheider wieder zurück zum Lösungsmittelbehälter der Anlage führen. Die genannten Verunreinigungen bleiben am Schmutzfilter zurück. Es ist ersichtlich, daß auf diese Weise auf einen gesonderten Destillierapparat verzichtet werden kann.

Somit ist es möglich, daß die Schmutzfiltereinrichtung bei ansonsten stillstehender Reinigungsanlage oder während der Kleidertrocknung auf Destillierbetrieb umgestellt und die Heizeinrichtung eingeschaltet wird, wonach, wenn das im Filtergehäuse enthaltene Lösungsmittel destilliert ist, bei eingeschalteter Heizeinrichtung das auf dem Schmutzfilter befindliche Filtrat getrocknet wird, beispielsweise indem man zunächst aus dem durch den Aufnahmeraum zur Kleidertrocknung gehenden Warmluftkreislauf der Reinigungsanlage Warmluft abzweigt und durch die Schmutzfiltereinrichtung hindurch und dann zurück in den Warmluftkreislauf leitet und anschließend Frischluft durchströmen läßt, und daß man anschließend das getrocknete Filtrat von der Filteroberfläche absaugt.

Weiter oben wurde erwähnt, daß der Rückspülkörper zweckmäßigerweise angehoben wird, bevor er gedreht wird. Da dieses Anheben gegen den im Aufnahmeraum herrschenden Druck erfolgt, kann zum Erleichtern des Anhebens vorgesehen sein, daß der Innenraum jedes Rückspülkörpers im Takt der Rückspülkörperbewegung mit dem im Eingangsraum herrschenden Druck beaufschlagbar ist. Auf diese Weise erhält man beim Anheben einen Druckausgleich.

Schließlich kann die Reinigungsanlage noch dadurch erweitert werden, daß sie einen mit dem Filtergehäuse abtrennbar verbundenen, eine Eingabe- und Entnahmeöffnung aufweisenden Trocknungsbehälter zur Aufnahme von durch anhaftendes Lösungsmittel feuchten Gegenständen wie Flusen, Lappen usw. enthält. Diese werden einfach in den Trocknungsbehälter gegeben und dort getrocknet.

Ausführungsbeispiele der Erfindung werden nun anhand der Zeichnung beschrieben. Es zeigen:

Fig. 1 eine erfindungsgemäße Reinigungsanlage in schematischer Darstellung,

Fig. 2 die Schmutzfiltereinrichtung der Anlage gemäß Fig. 1 in vergrößerter, ebenfalls schematischer Darstellung,

Fig. 3 die Schmutzfiltereinrichtung gemäß Fig. 2 im Horizontalschnitt gemäß der Schnittlinie III-III in Fig. 2,

Fig. 4 u. 5 jeweils eine abgewandelte Schmutzfiltereinrichtung in einem der Fig. 2 entsprechenden Vertikalschnitt, wobei die Rückspüleinrichtung der Übersichtlichkeit wegen weggelassen ist, und

Fig. 6a, 6b und 6c jeweils einen in die Reinigungsanlage integrierten Trocknungsbehälter.

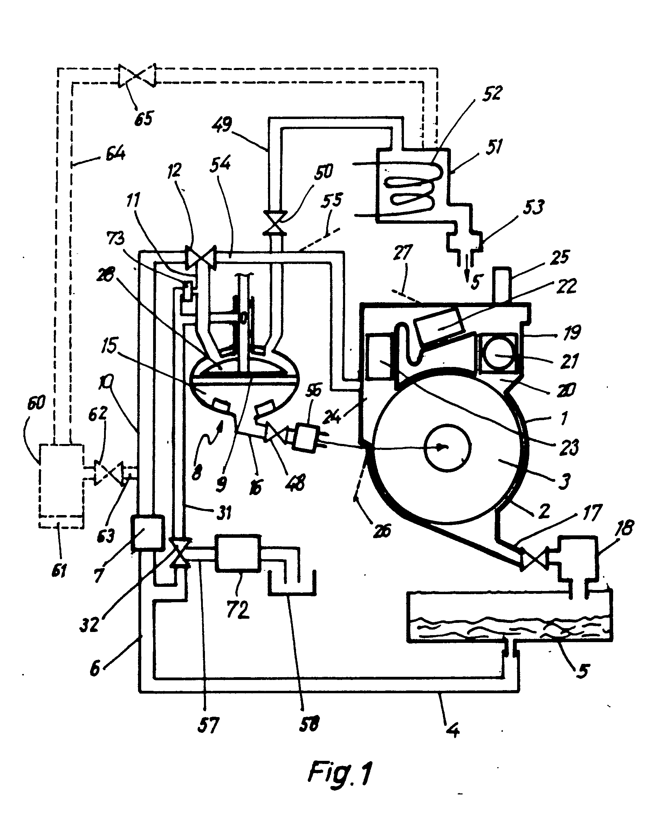

Die in Fig. 1 dargestellte Anlage dient zum chemischen Reinigen von Gegenständen aus Stoff, z. B. Kleider usw. In einem Anlagengehäuse 1 ist eine Reinigungstrommel 2 enthalten, die drehbar am Gehäuse 1 gelagert ist und in deren von ihr umschlossenen Behandlungsraum 3 die zu reinigenden Gegenstände eingegeben werden. Diese werden in einem ersten Verfahrensschritt mit einem den Schmutz lösenden Lösungsmittel gewaschen. Hierzu ist der Behandlungsraum 3 an einen Lösungsmittelkreislauf 4 angeschlossen. Dieser umfaßt einen Lösungsmittelbehälter 5, aus dem das Lösungsmittel mittels einer Lösungsmittel-Fördereinrichtung 7 in Gestalt einer Pumpe über einen Leitungsabschnitt 6 abgeführt wird. Anschließend an die Fördereinrichtung 7 gelangt das Lösungsmittel über einen Leitungsabschnitt 10 und einen weiteren Leitungsabschnitt 11 zu einer Schmutzfiltereinrichtung 8 mit einem Schmutzfilter 9. Zwischen den beiden Leitungsabschnitten 10 und 11 ist ein Ventil 12 vorhanden, mit dessen Hilfe der Lösungsmittelzustrom zur Schmutzfiltereinrichtung 8 unterbrochen werden kann.

Im Gehäuse 13 der Schmutzfiltereinrichtung 8 ist ein Eingangsraum 14 mit einem an den Leitungsabschnitt 11 angeschlossenen Lösungsmitteleinlaß und ein Ausgangsraum 15 mit einem Lösungsmittelauslaß, von dem ein Ausgangsleitungsabschnitt 16 abgeht, angeordnet. Zwischen dem Eingangsraum 14 und dem Ausgangsraum 15 befindet sich der Schmutzfilter 9. Dieser weist ebene Gestalt auf und ist horizontal angeordnet. Dabei wird beim bevorzugten Ausführungsbeispiel der Schmutzfilter 9 von einer Filterplatte aus gesintertem Material, insbesondere aus gesintertem Metall gebildet, so daß es sich um ein hitzebeständiges Filtermaterial handelt. Die Porengröße dieser Filterplatte kann vom Eingangsraum 14 zum Ausgangsraum 15 hin abnehmen, was man durch ein schichtweises Sintern erreichen kann.

Das Lösungsmittel tritt über den Leitungsabschnitt 11 über den Lösungsmitteleinlaß in den Eingangsraum 14 ein, durchströmt den den Boden des Eingangsraums bildenden Schmutzfilter 9, an dem sich der im Lösungsmittel befindliche Schmutz absetzt, und verläßt die Filtereinrichtung 8 ausgangsseitig, von wo es über den Leitungsabschnitt 16 zur Trommel 2 gelangt, in deren Behandlungsraum 3 das Lösungsmittel in axialer Richtung eingegeben wird. Das Lösungsmittel fließt dann aus dem Anlagengehäuse 1 über einen unteren Gehäuseauslaß 17 wieder ab und gelangt über ein Flusenfilter 18 in den Lösungsmittelbehälter 5 zurück.

Ist der Waschvorgang beendet, wird die Lösungsmittelzufuhr zum Behandlungsraum 3 unterbrochen, wonach die gewaschenen Gegenstände in der Trommel geschleudert werden. Das ausgeschleuderte Lösungsmittel läßt man in den Vorratsbehälter 5 ablaufen. Gleichzeitig fließt das Lösungsmittel auch aus der Schmutzfiltereinrichtung 8 in den Behälter 5 zurück, was je nach der speziellen Anordnung des Lösungsmittelkreislaufs über den Leitungsabschnitt 10 oder den Leitungsabschnitt 16 erfolgen kann.

Der Behandlungsraum 3 ist noch an einen weiteren Kreislauf angeschlossen, nämlich an einen Warmluftkreislauf, der über die Trommel 2 und einen Trommelgehäuseansatz 19 umströmt. Nach dem Waschen und Schleudern werden die in der Trommel 2 befindlichen Gegenstände diesem Warmluftstrom zum Trocknen ausgesetzt, wobei auch das noch anhaftende Lösungsmittel verdampft wird. Der Warmluftstrom tritt an einem oberen radialen Ausgang 20 des Trommelgehäuses 1 aus dem Behandlungsraum 3 aus, strömt durch ein weiteres Flusenfilter 21 und gelangt über einen Luftkühler 22, einen dem Luftkühler in Strömungsrichtung nachgeschalteten Lufterhitzer 23 sowie über einen oberen radialen Einlaß 24 in den Behandlungsraum 3 zurück. Dem Luftkühler 22 ist ein nicht dargestellter Kondensatabscheider zugeordnet, in dem das an dieser Stelle kondensierende Lösungsmittel aus dem Warmluftstrom abgeschieden wird, so daß die nachfolgend im Lufterhitzer 23 erhitzte Luft vom Lösungsmittel befreit wieder in den Behandlungsraum 3 eintritt. Der Warmluftstrom wird durch einen Warmluftfördereinrichtung 25 aufrecht gehalten, die im Gehäuseansatz 19 zwischen dem Flusenfilter 16 und dem Luftkühler 17 angeordnet ist und von der nur der Motor eingezeichnet ist.

Nach diesem Verfahrensschritt werden die getrockneten Gegenstände in der Trommel 2 noch mit Umluft oder Frischluft gelüftet. Hierzu besitzt das Trommelgehäuse 1 eine gestrichelt angedeutete Frischluftklappe 26, die nach dem Trocknungsvorgang der Gegenstände geöffnet wird. Dabei bleibt die Warmluftfördereinrichtung 25 eingeschaltet, so daß die aus der Umgebung in den Behandlungsraum einströmende Frischluft über den Auslaß 20 in den Gehäuseansatz 19 gelangt. Hier durchströmt die Umluft oder Frischluft den Flusenfilter 16 und den Luftkühler 17, so daß wiederum eine Entfernung von noch eventuell mitgeführten Restbeständen des Lösungsmittels durch Kondensation erfolgt. Die so gereinigte Luft wird dann über eine Auslaßklappe 27 zwischen Luftkühler 22 und Lufterhitzer 23 nach außen abgeblasen. Es versteht sich, daß die Klappe 27 wie die Klappe 26 bei den vorhergehenden Verfahrensschritten geschlossen sind.

Beim Waschen der Gegenstände, wenn in dem Lösungsmittelkreislauf Lösungsmittel umströmt, hält der Schmutzfilter 9 den im Lösungsmittel enthaltenen Schmutz zurück. Wegen der zum Auslaß hin abnehmenden Porengröße des Sintermaterials werden kleine Schmutzteilchen in den dem Auslaß zugewandten Filterschichten und größere Schmutzteilchen weiter oben zurückgehalten, so daß man ein großes wirksames Filtervolumen erhält. Auch auf der einlaßseitigen Oberseite des Schmutzfilters 9 lagern sich andauernd Schmutzteilchen ab, was äußerst nachteilig ist, da diese Schmutzteilchen den Eintritt des Lösungsmittels in den Schmutzfilter 9 behindern. Deshalb erfolgt während des Lösungsmittelumlaufs andauernd eine Wegnahme dieser sich auf der Filteroberseite absetzenden Schmutzteilchen. Dies wird durch eine im Eingangsraum 14 angeordnete Rückspüleinrichtung 28 erreicht. Diese weist mindestens einen auf die Schmutzfilteroberseite aufsetzbaren, im aufgesetzten Zustand einen gegen den Eingangsraum 14 dichten und über den Schmutzfilter 9 bewegbaren Rückspülkörper 29 auf. Beim Ausführungsbeispiel sind sechs solche Rückspülkörper 29 vorhanden, die mit gleichen Winkelabständen versetzt zueinander oberhalb des kreisförmigen Schmutzfilters 9 angeordnet sind. An seiner dem Schmutzfilter 9 zugewandten Unterseite weist jeder Rückspülkörper 29 eine Rückspülöffnung 30 auf, über die die bei strömendem Lösungsmittel sich auf dem Schmutzfilter 9 absetzenden Schmutzteilchen abgeführt werden. Dabei gelangen diese Schmutzteilchen über eine mit der Rückspülöffnung 30 verbundene Rückspülleitung 31 in den Lösungsmittelkreislauf zurück. Die Einmündung der Rückspülleitung 31 in den Lösungsmittelkreislauf erfolgt an einer stromaufwärts der Lösungsmittel-Fördereinrichtung 7 gelegenen Stelle. In der Rückspülleitung 31 befindet sich ein Ventil 32, das während des Rückspülens auf Durchlaß zum Lösungsmittelkreislauf gestellt ist und dessen Zweck weiter unten noch erläutert werden wird.

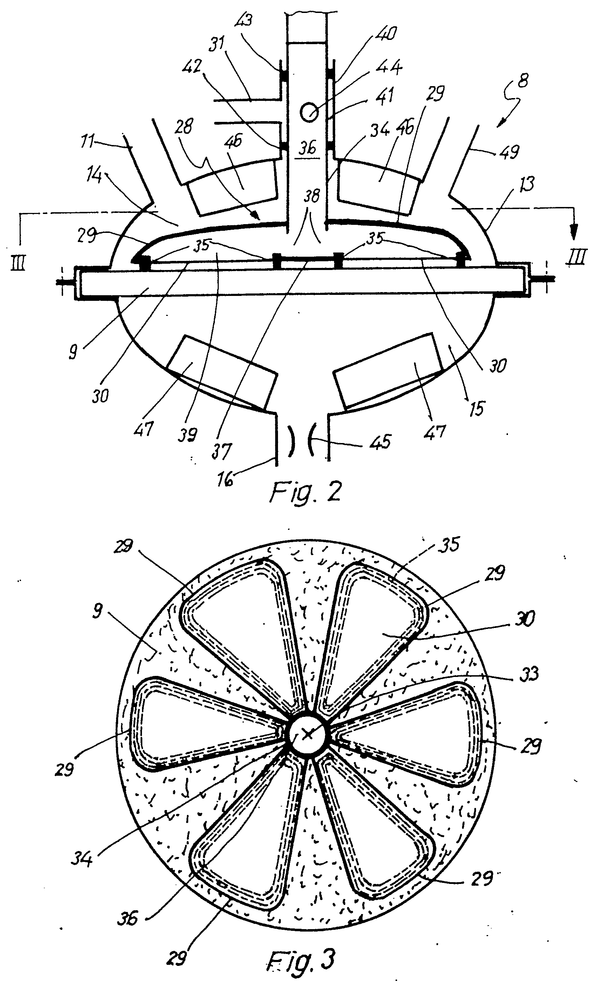

Die Rückspülkörper 29 sind um eine rechtwinkelig zur Schmutzfilterebene stehende Achse 33 drehbar, indem sie seitlich an einem zentral am Filtergehäuse gelagerten Rückspülrohr 34 befestigt sind. Bei den Rückspülkörpern 29 handelt es sich um von der dem Schmutzfilter 9 zugewandten Unterseite her eingemuldete Metallteile, die in Draufsicht gesehen (Fig. 3) flügelartig vom Rückspülrohr 34 abstehen und hierbei bis etwa zum Außenumfang des Schmutzfilters 9 reichen. Radial innen sind sie an das Rückspülrohr 34 beispielsweise durch Anschweißen angesetzt. Die von der offenen Rückspülkörper-Unterseite gebildete Rückspülöffnung 30 jedes Rückspülkörpers 29 wird von einer zweckmäßigerweise von einem Dichtring 35 gebildeten Dichtung umgeben, die beispielsweise in eine umlaufende Nut am Umfang der Rückspülkörper-Unterseite eingesetzt sein kann. Diese Dichtringe 35 stehen von der Rückspülkörper-Unterseite vor, so daß der jeweilige Rückspülkörper 29 über seinen Dichtring 35 auf dem Schmutzfilter 9 aufsitzt. Die von dem jeweiligen Dichtring 35 umschlossene Fläche, d. h. die Rückspülöffnung 30, ist somit gegen den Eingangsraum 14 abgedichtet. An der dem Schmutzfilter 9 abgewandten Seite sind die Rückspülkörper 29 durchgehend geschlossen. Die Oberseite des Schmutzfilters 9 kann, da sie aus Sintermaterial besteht, sehr eben und glatt sein, so daß kein Lösungsmittel unter dem jeweiligen Dichtring 35 hindurch zur Rückspülöffnung 30 gelangen kann.

Das Rückspülrohr 34 ist am dem Schmutzfilter 9 zugewandten Ende durch einen Rohrboden 37 verschlossen. Der Innenraum 36 des Rückspülrohres 34 ist mit den Rückspülöffnungen 30 der Rückspülkörper 29 verbunden, so daß die Schmutzteilchen-Abfuhr über das Rückspülrohr 34 erfolgt. Zu diesem Zwecke weist das Rückspülrohr 34 an jeder Stelle, wo ein Rückspülkörper 29 befestigt ist, eine Durchbrechung 38 (Fig. 2) auf, wobei auch die die Rückspülöffnung 30 bildende Einmuldung 39 der Rückspülkörper 29 an dieser Stelle offen ist. In Fig. 3 wurden die Durchbrechungen 38 der Übersichtlichkeit wegen nicht eingezeichnet. Damit die Abfuhr der Schmutzteilchen an den Durchbrechungen 38 nicht behindert wird, sollten diese genügend groß sein. Dies kann man durch einen entsprechend großen Durchmesser des Rückspülrohres 34 erreichen, so daß an dessen Umfang genügend Platz für das Befestigen der Rückspülkörper 29 und das Anbringen der Durchbrechungen 38 vorhanden ist.

Beim Ausführungsbeispiel ist das Rückspülrohr 34 in einem am Filtergehäuse 13 angeordneten und von diesem zentral nach oben abstehenden Rohrstutzen 40 gelagert, wobei zwischen dem Rohrstutzen 40 und dem Rückspülrohr 34 ein Ringraum 41 vorhanden ist, der zum Eingangsraum 14 der Schmutzfiltereinrichtung hin durch einen Dichtund Lagerring 42 und nach außen hin durch einen zweiten Dicht- und Lagerring 43 abgedichtet ist. Im zwischen den beiden Dicht- und Lagerringen 42, 43 verlaufenden Bereich des Rückspülrohres 34 weist dessen Wandung mindestens eine Rohröffnung 44 auf, so daß der Innenraum 36 des Rückspülrohres 34 mit dem Ringraum 41 verbunden ist. Ferner weist der Rohrstutzen 40 im Bereich zwischen den beiden Dicht- und Lagerringen 42, 43 einen Anschluß auf, von dem die Rückspülleitung 31 abgeht, so daß diese mit dem Ringraum 41 verbunden ist.

Der mindestens eine Rückspülkörper 29 ist um die Achse 33 drehbar, indem das Rückspülrohr 34 drehbar im Rohrstutzen 40 gelagert ist. Der oder die Rückspülkörper 29 sind ferner in Richtung der Achse 33 heb- und senkbar, wiederum indem das Rückspülrohr 34 im Rohrstutzen 40 längsverschieblich gelagert ist. Zum Drehen sowie zum Heben und Absenken der Rückspüleinrichtung 28, also der Rückspülkörper 29 mit dem Rückspülrohr 34, ist dessen aus dem Rohrstutzen 40 ragendes Ende mit einer diese Bewegungen bewirkenden Betätigungseinrichtung verbunden, die in der Zeichnung nicht dargestellt ist. Befindet sich die Rückspüleinrichtung beispielsweise in der in Fig. 3 gezeigten Drehlage, in der die Rückspülkörper 29 auf dem Schmutzfilter 9 aufsitzen, werden die unter den Rückspülkörpern auf der Schmutzfilteroberseite liegenden Schmutzteilchen abgeführt. Anschließend wird die Rückspüleinrichtung in Richtung der Achse 33 etwas angehoben und um einen Winkelbetrag verdreht. Sodann wird die Rückspüleinrichtung wieder auf die Schmutzfilteroberseite abgesenkt. Dies erfolgt automatisch und mit gleichmäßigem Takt, so daß die Schmutzfilteroberseite schrittweise überstrichen wird. In Fig. 3 sind durch Punkte Schmutzteilchen angedeutet, die sich in der gezeigten Drehstellung der Rückspüleinrichtung zwischen den Rückspülkörper 29 abgelagert haben. Diese werden anschließend beim schrittweisen Versetzen der Rückspüleinrichtung weggenommen.

Die Wegnahme der Schmutzteilchen mittels der Rückspüleinrichtung erfolgt selbsttätig. Dies geschieht durch den im Ausgangsraum 15 der Schmutzfiltereinrichtung herrschenden und durch den Schmutzfilter 9 hindurch an jeder Rückspülöffnung 30 wirksamen Lösungsmitteldruck. Hierzu ist es zweckmäßig, daß im Lösungsmittelauslaß bzw. anschließend an diesen im Ausgangsleitungsabschnitt 16 eine Drosselstelle 45 angeordnet ist, die auch einfach dadurch gebildet werden kann, daß der Lösungsmittelauslaß aus dem Filtergehäuse oder der Leitungsabschnitt 16 einen genügend kleinen Querschnitt besitzt, damit sich das durch den Schmutzfilter 9 gelangende Lösungsmittel im Ausgangsraum 15 staut und im Ausgangsraum 15 sozusagen ein Rückdruck entsteht, der durch den Schmutzfilter 9 hindurch auf die unter den Rückspülkörpern 29 befindlichen Schmutzteilchen einwirkt. Dabei wird die Schmutzteilchen-Abfuhr durch die Lösungsmittelfördereinrichtung 7 unterstützt, die eine Saugwirkung erzeugt.

Das Filtergehäuse 13 kann in Draufsicht gesehen eine dem Schmutzfilter 9 angepaßte Kreisgestalt besitzen. Im Querschnitt gesehen (Fig. 2) kann das Filtergehäuse ovalähnlich sein. Das Gehäuse 13 kann ferner aus einer oberen und einer unteren Gehäusehälfte bestehen, zwischen denen, wie in Fig. 2 dargestellt, der Schmutzfilter 9 angeordnet ist. An der oberen Gehäusehälfte ist zentral der Rohrstutzen 40 und außermittig der Lösungsmitteleinlaß 11 sowie ein noch zu beschreibender Destillieranschluß angeordnet. Die untere Gehäusehälfte weist zentral den Lösungsmittelauslaß auf. Die Rückspülkörper 29 nehmen nur einen verhältnismäßig kleinen Teil der Höhe des Eingangsraumes 14 ein.

Die Schmutzfiltereinrichtung 8 enthält eine Heizeinrichtung, die in den Figuren 1 und 2 nur angedeutet ist. Dabei kann im Eingangsraum 14 und/oder im Ausgangsraum 15 eine Heizeinrichtung 46 bzw. 47 angeordnet sein, wobei vor allem im Eingangsraum 14 eine Heizeinrichtung günstig ist. Die Heizeinrichtung kann beispielsweise eine Widerstandsheizung sein, deren Heizdrähte z.B. ringförmig angeordnet oder spiralig umlaufen können. Es versteht sich, daß die Heizdrähte elektrisch entsprechend isoliert sind. Auch könnten einzelne Heizstäbe vorhanden sein. Ferner könnte man die Heizeinrichtung auch mit Dampf oder Öl betreiben. Beim Ausführungsbeispiel ist zweckmäßigerweise vorgesehen, daß die Heizeinrichtung 46 bzw. 47 eine Mikrowellen-Heizeinrichtung ist.

Auf Grund des Vorhandenseins dieser Heizeinrichtung 46 bzw. 47 kann die Schmutzfiltereinrichtung 8 eine weitere Funktion erfüllen, nämlich die eines Destillierapparates.

Von dem Schmutzfilter 9 werden nicht alle im Lösungsmittel enthaltenen Verunreinigungen ausgefiltert. Ohne zusätzliche Maßnahmen würde sich das Lösungsmittel im Laufe der Zeit mit solchen Verunreinigungen, z. B. Öl, Fettsäuren usw. in solchem Ausmaße anreichern, daß man keine sauberen Kleider od. dgl. mehr erhält. Will man solche Verunreinigungen entfernen, schaltet man vom Filterbetrieb, bei dem das Lösungsmittel durch die Filtereinrichtung strömt, auf Destillierbetrieb. Dies erfolgt zweckmäßigerweise bei stillstehender Anlage, d. h. wenn keine Kleider od. dgl. gewaschen werden. Schließt man das in dem zur Reinigungstrommel 2 führenden Leitungsabschnitt 16 enthaltene Ventil 48, bleibt das Lösungsmittel in der Schmutzfiltereinrichtung 8 stehen. Bei eingeschalteter Heizeinrichtung 46 und/oder 47 verdampft nun das im Filtergehäuse, das einen Destillierraum bildet, befindliche Lösungsmittel, wobei der Lösungsmitteldampf über den schon erwähnten, am Eingangsraum 14 vorgesehenen Destillieranschluß in einer Destillierleitung 49 hochsteigt. In dieser ist ein Ventil 50 enthalten, das beim Destillierbetrieb den Lösungsmitteldampf durchläßt. Ansonsten ist dieses Ventil geschlossen. Die Destillierleitung 49 führt zu einem Kondensator 51, der mittels einer Kühlschlange 52 od. dgl. Kühleinrichtung gekühlt wird, so daß der durch die Destillierleitung 49 ankommende Lösungsmitteldampf kondensiert. Das kondensierte Lösungsmittel wird durch einen Wasserabscheider 53 geleitet und gelangt von diesem zum Lösungsmittelbehälter 5 zurück. Bei diesem Destilliervorgang bleiben die im Lösungsmittel in feiner Verteilung enthaltenen Verunreinigungen im Eingangsraum 14 der Schmutzfiltereinrichtung 8 zurück, da sie eine höhere Verdampfungstemperatur als das Lösungsmittel besitzen und die Heizeinrichtung 46 bzw. 47 mit einer dazwischen liegenden Temperatur betrieben wird. Die Verunreinigungen bleiben im Eingangsraum 14 in eingedicktem Zustand zurück und lagern sich dort ab.

Diese Ablagerungen sowie das vom Schmutzfilter 9 zurückgehaltene Filtrat muß von Zeit zu Zeit entfernt werden. Man kann diesen Schmutz aus Umweltgründen allerdings nicht einfach wegwerfen, da er noch mit Lösungsmittel getränkt ist. Deshalb ist folgendes vorgesehen:

Zum Trocknen des Filtrats - wenn im folgenden von Filtrat gesprochen wird, so ist hiermit auch der beim Destillieren zurückbleibende Sumpf gemeint - wird die Lösungsmittelzufuhr zur Schmutzfiltereinrichtung unterbrochen, was durch Umstellen des Ventils 12 erfolgen kann. Ferner läßt man Luft durch die Schmutzfiltereinrichtung 8 strömen, die in den Eingangsraum 14 eintritt, den Schmutzfilter 9 durchdringt und dann aus dem Ausgangsraum 15 austritt. Da die Heizeinrichtung 46 und/oder 47 in der Schmutzfiltereinrichtung eine entsprechend hohe Temperatur schafft, nimmt diese Luft die Lösungsmittelreste mit. Zweckmäßigerweise ist zur Luftzufuhr eine Luftleitung 54 vorgesehen, die von dem weiter oben beschriebenen Warmluftkreislauf in Strömungsrichtung hinter dem Lufterhitzer 23 vom Gehäuseansatz 19 abzweigt und mit dem Eingangsraum 14 der Schmutzfiltereinrichtung verbunden ist. Beim Ausführungsbeispiel ist die Luftleitung 54 an das als Mehrwegeventil ausgebildete Ventil 12 angeschlossen, das so ausgebildet ist, daß bei abgetrenntem Leitungsabschnitt 10 des Lösungsmittelkreislaufs die Luftleitung 54 mit dem zur Schmutzfiltereinrichtung führenden Leitungsabschnitt 11 verbunden ist. In der anderen Ventilstellung, auf die beim Waschen der Kleider od. dgl. gestellt wird, sind die beiden Leitungsabschnitte 10 und 11 miteinander verbunden, während die Luftleitung 54 abgetrennt ist. Der Lufterhitzer 23 bewirkt eine Vorerhitzung der durch die Schmutzfiltereinrichtung geführten Luft. Nach dem Durchströmen der Schmutzfiltereinrichtung wird die das aus dem Filtrat stammende Lösungsmittel enthaltende Luft bei geöffnetem Ventil 48 über den Ausgangsleitungsabschnitt 16 zum Anlagengehäuse 1 zurückgeführt. Der geschilderte Luftstrom kann durch die Warmluftfördereinrichtung 25 des Warmluftkreislaufes aufrecht gehalten werden. Das in der Luft enthaltene Lösungsmittel kondensiert im Luftkühler 22 bzw. in dem zugehörigen Kondensatabscheider.

Da die das Filtrat trocknende Luft im Kreise strömt, kann sie das Filtrat nicht vollständig trocknen. Deshalb führt man schließlich bei eingeschalteter Heizeinrichtung noch Frischluft durch die Schmutzfiltereinrichtung, wozu beispielsweise in der Luftleitung 54 eine Frischluftklappe 55 vorhanden ist. Des besseren Luftdurchsatzes insbesondere der Frischluft wegen ist im Ausgangsleitungsabschnitt 16 noch eine weitere Luftfördereinrichtung 56 vorhanden.

Ist das Filtrat auf diese Weise vollständig getrocknet, kann man es einfach durch Absaugen entfernen, so daß die Schmutzfiltereinrichtung nicht einmal geöffnet werden muß. Dies erfolgt zweckmäßigerweise über die Rückspüleinrichtung 28, die ja nur während des Waschvorgangs, d. h. wenn das Lösungsmittel im Lösungsmittelkreislauf umströmt, zum Rückspülen benötigt wird. Um die Rückspüleinrichtung zum Absaugen des getrockneten Filtrats verwenden zu können, zweigt von der Rückspülleitung 31 eine Saugleitung 57 ab, die an eine Saugeinrichtung 58 angeschlossen ist. Diese Saugleitung 57 wird nur zum Absaugen des getrockneten Filtrats geöffnet, ansonsten ist sie abgetrennt. Hierzu ist das Ventil 32 als Mehrwegeventil ausgebildet und verbindet die Rückspülleitung 31 in seiner einen Stellung mit dem Leitungsabschnitt 6 des Lösungsmittelkreislaufs und in seiner anderen Stellung mit der Saugleitung 57. Die Saugleitung 57 führt zu einem Schmutzbehälter 72, in dem das getrocknete Filtrat gesammelt wird, das dann weggeworfen werden kann.

Insgesamt ergibt sich also, daß die Schmutzfiltereinrichtung 8 bei stillstehender Reinigungsanlage oder während der Kleidertrocknung auf Destillierbetrieb umgestellt und die Heizeinrichtung 46 und/oder 47 eingeschaltet wird, wonach, wenn das im Filtergehäuse enthaltene Lösungsmittel destilliert ist, bei eingeschalteter Heizeinrichtung das auf dem Schmutzfilter 9 befindliche Filtrat getrocknet wird, beispielsweise indem man zunächst aus dem durch den Aufnahmeraum 3 zur Kleidertrocknung gehenden Warmluftkreislauf der Reinigungsanlage Warmluft abzweigt und durch die Schmutzfiltereinrichtung 8 hindurch und dann zurück in den Warmluftkreislauf leitet und anschließend Frischluft durchströmen läßt, und daß man anschließend das getrocknete Filtrat von der Filteroberfläche absaugt.

Es versteht sich, daß man zusätzlich auch noch einen gesonderten Destillierapparat zuschalten kann, wie in Fig. 1 gestrichelt angedeutet ist. Es handelt sich hier um einen zusätzliche Destillierapparat 60 mit einer Heizeinrichtung 61, in den man von Zeit zu Zeit eine Teilmenge des Lösungsmittels aus dem Lösungsmittelkreislauf einströmen läßt. Hierzu kann ein Ventil 62 dienen, das in einen vom Leitungsabschnitt 10 zum zusätzlichen Destillierapparat 60 führenden Leitungsabschnitt 63 geschaltet ist und in geöffnetem Zustand das Lösungsmittel durchläßt. Infolge der von der Heizeinrichtung 61 abgegebenen Wärme verdampft das im zusätzlichen Destillierapparat 60 befindliche Lösungsmittel. Der Lösungsmitteldampf gelangt über eine hochgehende Leitung 64, in die gegebenenfalls ein weiteres Ventil 65 geschaltet ist, zum Kondensator 51.

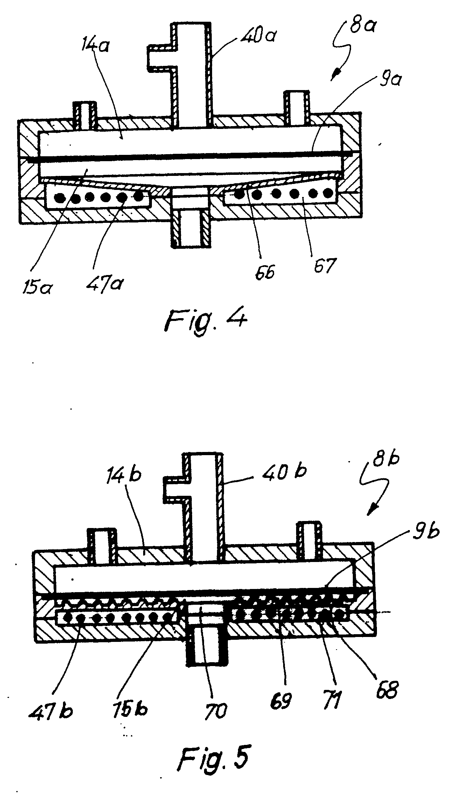

In Fig. 4 ist eine abgewandelte Schmutzfiltereinrichtung 8a dargestellt. Sie besitzt einen rechteckigen Querschnitt, wobei der wiederum plattenförmige Schmutzfilter 9a ebenfalls den Eingangsraum 14a vom Ausgangsraum 15a trennt. Vom eingangsseitigen Gehäuseteil steht der Rohrstutzen 40a ab. Ferner sind die eingangsseitigen Anschlüsse für den Leitungsabschnitt 11 des Lösungsmittelkreislaufs und die Destillierleitung 49 eingezeichnet. Der Boden des Ausgangsraums 15a wird von einer Wand 66 gebildet, die kegelig ist und an zentraler Stelle eine Öffnung zum Durchströmen des Lösungsmittels zum Ausgangsleitungsabschnitt 16 besitzt. Unterhalb der Wand 66 ist eine zum Lösungsmittel hin abgedichtete Gehäusekammer 67 vorhanden, die die Heizeinrichtung 47a aufnimmt, so daß die Wand 66 beheizbar ist. Eine entsprechende Wand 66 mit daneben liegender Heizkammer könnte auch eingangsseitig vorhanden sein.

Im Falle der Figur 5 werden wieder, soweit es sich um gleiche Teile handelt, gleiche Bezugsziffern unter Hinzufügung des Buchstabens "b" verwendet. In diesem Falle liegt der Schmutzfilter 9b auf einer aufheizbaren Unterlagsplatte 68 auf, die an ihrer dem Schmutzfilter 9b zugewandten Oberseite Strömungsnuten 69 od. dgl. enthält, die mit einer zum Auslaß hin offenen Ausnehmung 70 der Unterlagsplatte verbunden sind. Dabei sind sowohl ringförmig umlaufende Strömungsnuten als auch diese kreuzende Radialnuten vorhanden, so daß das Lösungsmittel nach Durchdringen des Schmutzfilters aus allen Nuten zum Auslaß gelangen kann. Unterhalb der Unterlagsplatte 68 ist wieder eine abgedichtete Heizkammer 71 mit einer Heizeinrichtung 47b vorhanden.

In den Figuren 4 und 5 wurde der Übersichtlichkeit wegen die Rückspüleinrichtung weggelassen.

Oben wurde beschrieben, daß das Trocknen des Filtrats durch Zufuhr von aus dem Warmluftkreislauf der Anlage über die Luftleitung 54 kommende Warmluft erfolgen kann, wonach man noch Frischluft durchströmen läßt. Anstelle hiervon kann man je nach den Gegebenheiten auch nur mit Um- oder Frischluft arbeiten, d. h. ohne Zuschalten des Warmluftkreislaufs. Ferner ist es möglich, die Trocknung des Filtrats bei ansonsten dicht abgetrenntem Filtergehäuse durch Erzeugen eines Unterdrucks, also durch Vakuumwirkung vorzunehmen, indem man eine an das Filtergehäuse angeschlossene Vakuumpumpe od.dgl., die von der Fördereinrichtung 56 gebildet werden kann, einschaltet. Dabei kann man anschließend, falls erforderlich, eventuell Frischluft durchströmen lassen oder das Filtergehäuseinnere über einen Belüftungsanschluß belüften. In allen diesen Fällen wird bei eingeschalteter Heizeinrichtung gearbeitet.

Es versteht sich, daß die Frischluftklappe 55 auch an anderer Stelle als an der Luftleitung 54 angeordnet sein kann, beispielsweise am Filtergehäuse 13.

Des weiteren kann man anstelle der gesonderten Saugeinrichtung 72 auch vorsehen, daß man zum Absaugen der getrockneten Schmutzteilchen die bereits vorhandene Fördereinrichtung 56 verwendet.

Aus Fig. 1 geht noch eine weitere Einzelheit hervor:

Wie schon geschildert, wird die Rückspüleinrichtung 28, bevor sie gedreht und dann in der neuen Drehstellung wieder abgesenkt wird, angehoben. Auf der Oberseite der Rückspülkörper 29 lastet jedoch der Druck des im Aufnahmeraum 14 befindlichen Lösungsmittels, der im Bereich von ca. 1,5—2 bar liegen kann. Demgegenüber herrscht im gegen den Aufnahmeraum 14 abgedichteten Innenraum der Rückspülkörper 29 — sieht man keine weiteren Maßnahmen vor — ein geringerer Druck, so daß das Anheben mit einer nicht unerheblichen Kraftaufwendung verbunden ist. Dies kann man nun dadurch vermeiden, daß der Innenraum jedes Rückspülkörpers 29 im Takt der Rückspülkörperbewegung mit dem im Eingangsraum 14 herrschenden Druck beaufschlagbar ist. Hierzu ist beim Ausführungsbeispiel die Rückspülleitung 31 über ein Druckausgleichsventil 73 mit dem eingangsseitigen, das Lösungsmittel zur Filtereinrichtung zuführenden Leitungsabschnitt 11 verbunden, das immer dann kurzzeitig öffnet, wenn zum Abheben des oder der Rückspülkörper 29 ein Druckausgleich zwischen dem Aufnahmeraum 14 und dem Rückspülkörperinneren hergestellt werden soll. Das Druckausgleichsventil 73 wird im Takt der die Hub- und Drehbewegung der Rückspüleinrichtung bewirkenden Einrichtung gesteuert.

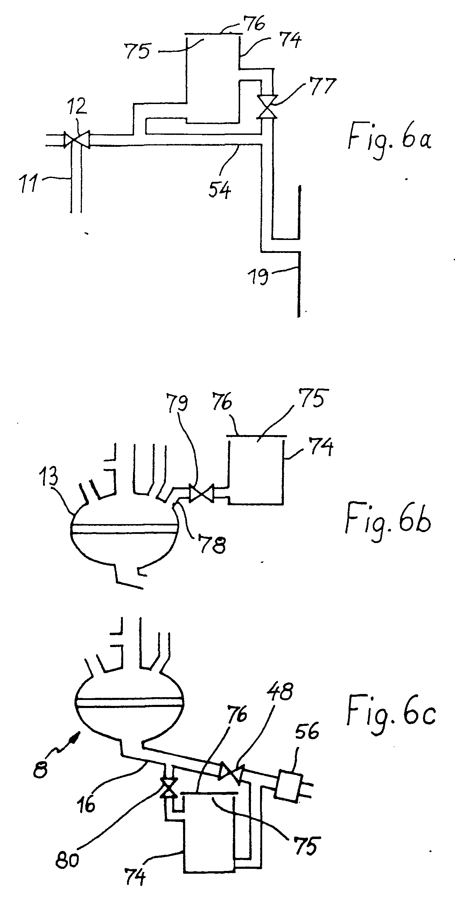

Schließlich wird anhand der Figuren 6a, b und c noch folgende Möglichkeit erläutert:

Im Zusammenhang mit dem Betrieb einer Reinigungsanlage der geschilderten Art fallen durch anhaftendes Lösungsmittel feuchte Gegenstände wie Flusen (z.B. im Flusenfilter 18), Lappen usw. an. Auch aus diesen Gegenständen kann man das Lösungsmittel entfernen und gegebenenfalls in den Lösungsmittelkreislauf zurückbringen, wenn man einen mit dem Filtergehäuse 13 verbundenen, eine Eingabe- und Entnahmeöffnung aufweisenden Trocknungsbehälter vorsieht. In allen Figuren ist dieser Trocknungsbehälter mit der Bezugsziffer 74, eine Eingabe- und Entnahmeöffnung mit 75 und die dieser zugeordnete Abdeckung, die zum Einfüllen und Entnehmen der Gegenstände geöffnet werden kann, mit 76 bezeichnet.

Im Falle der Fig. 6a wird dem Trockungsbehälter 74 über eine von einem Ventil 77 beherrschte Abzweigung Warmluft aus der Warmluftleitung 54 zugeführt, die unter Mitnahme des Lösungsmittels stromabwärts wieder in die Warmluftleitung gelangt.

Im Falle der Fig. 6b weist das Filtergehäuse 13 eingangsseitig einen Trocknungsbehälteranschluß 78 auf, an den über ein Absperrventil 79 der Trocknungsbehälter 74 angeschlossen ist. Die Trocknung der Gegenstände erfolgt wie die des Filtrats.

Der Trocknungsbehälter 74 kann auch, wie aus Fig. 6c hervorgeht, an der Ausgangsseite der Filtereinrichtung 8 angeordnet sein, wozu man einen gesonderten Filtergehäuseanschluß vorsehen oder die Anordnung zweckmäßigerweise so treffen kann, daß von dem Ausgangsleitungsabschnitt 16 eine ein Absperrventil 80 enthaltende Abzweigung wegführt, an die der Trocknungsbehälter angeschlossen ist. Nach dem Durchströmen des Trocknungsbehälters gelangt die das Lösungsmittel mitnehmende Luft in den Leitungsabschnitt 16 vor der Fördereinrichtung 56 zurück. Diese Ausführungsform hat den Vorzug, daß die Heizeinrichtung der Filtereinrichtung auch zum Erhitzen der durch den Trocknungsbehälter gehenden Luft verwendet werden kann.

Es versteht sich, daß man stets dann, wenn das im Filtergehäuse 13 befinjdliche Filtrat getrocknet wird, den zuschalten kann.

Des weiteren kann man auch eine Frischluftzufuhr zum Trocknungsbehälter vorsehen, z. B. indem an ihm eine geeignete Frischluftoder Belüftungsklappe angeordnet ist.

Des weiteren sollte der Trocknungsbehälter noch eine Siebeinrichtung od. dgl. zum Zurückhalten beispielsweise der Flusen enthalten.

Man kann also von Zeit zu Zeit z. B. die im Flusenfilter 18 sich sammelnden Flusen od. dgl. aus diesem entnehmen und in den Trocknungsbehälter einfüllen, in dem sie unter Rückgewinnung des Lösungsmittels getrocknet werden, wonach man sie wegwerfen kann.

Schließlich ist es auch noch möglich am oder im jeweiligen Trocknungsbehälter eine gesonderte Heizeinrichtung vorzusehen.

**Patentansprüche**

1. Reinigungsanlage zum chemischen Reinigen von Gegenständen aus Stoff, beispielsweise Kleider, mit einem beispielsweise von einer drehbaren Trommel gebildeten Behandlungsraum, der an einen eine Lösungsmittel-Fördereinrichtung und eine Schmutzfiltereinrichtung enthaltenden Lösungsmittelkreislauf angeschlossen ist, wobei das Gehäuse der Schmutzfiltereinrichtung einen Eingangsraum mit einem Lösungsmitteleinlaß und einen Ausgangsraum mit einem Lösungsmittelauslaß aufweist und im Strömungsweg dazwischen einen eine ebene Gestalt aufweisenden Schmutzfilter enthält und wobei zum Trocknen des Filtrats bei abgetrennter Lösungsmittelzufuhr der Schmutzfilter mittels einer Luftfördereinrichtung vom Eingangsraum zum Ausgangsraum mit Luft durchströmbar ist, dadurch gekennzeichnet, daß im Eingangsraum (14) eine Rückspüleinrichtung (28) angeordnet ist, die mindestens einen auf die Schmutzfilteroberseite aufsetzbaren, im aufgesetzten Zustand einen gegen den Eingangsraum (14) dichten und über den Schmutzfilter (9) bewegbaren Rückspülkörper (29) aufweist, der an seiner dem Schmutzfilter (9) zugewandten Unterseite eine Rückspülöffnung (30) aufweist, über die bei strömendem Lösungsmittel sich auf dem Schmutzfilter (9) absetzende Schmutzteilchen abgeführt werden, die über eine mit der Rückspülöffnung (30) verbundene Rückspülleitung (31) in den Lösungsmittelkreislauf zurückgelangen, und daß die Schmutzfiltereinrichtung (8) eine Heizeinrichtung (46, 47) enthält.

2. Reinigungsanlage nach Anspruch 1, dadurch gekennzeichnet, daß der mindestens eine Rückspülkörper (29) um eine rechtwinkelig zur Filterebene stehende Achse (33) drehbar sowie in Achsrichtung heb- und senkbar ist, derart, daß der Rückspülkörper (29) zur Lageveränderung auf dem Schmutzfilter (9) zunächst angehoben, anschließend gedreht und dann wieder abgesenkt wird.

3. Reinigungsanlage nach Anspruch 2, dadurch gekennzeichnet, daß der Innenraum des mindestens einen Rückspülkörpers (29) zum Abheben des Rückspülkörpers vom Schmutzfilter (9) im Takt der Rückspülkörperbewegung mit dem im Eingangsraum (14) herrschenden Druck beaufschlagbar ist.

4. Reinigungsanlage nach einem der Ansprüche 1 bis 3, dadurch gekennzeichnet, daß an der Unterseite jedes Rückspülkörpers (29) eine die Rückspülöffnung (30) umgebende Dichtung (35), zweckmäßigerweise ein Dichtring, vorhanden ist, über die der Rückspülkörper (29) auf dem Schmutzfilter (9) aufsitzt.

5. Reinigungsanlage nach einem der Ansprüche 2 bis 4, dadurch gekennzeichnet, daß die Achse (33) von einem zentral am Filtergehäuse (13) gelagerten Rückspülrohr (34) gebildet wird, an dem der mindestens eine Rückspülkörper (29) seitlich befestigt ist und dessen Rohrinnenraum (36) mit der Rückspülöffnung (30) verbunden ist, so daß die Schmutzteilchen-Abfuhr über das Rückspülrohr (34) erfolgt.

6. Reinigungsanlage nach Anspruch 5, dadurch gekennzeichnet, daß das Rückspülrohr (34) in einem am Filtergehäuse (13) angeordneten Rohrstutzen (40) gelagert ist, wobei zwischen dem Rohrstutzen und dem Rückspülrohr ein zum Eingangsraum (14) und nach außen hin abgedichteter Ringraum (41) vorhanden ist, der einerseits über mindestens eine Rohröffnung (44) des Rückspülrohres mit dessen Innenraum (36) und andererseits über einen am Rohrstutzen angeordneten Anschluß mit der Rückspülleitung (31) verbunden ist.

7. Reinigungsanlage nach einem der Ansprüche 1 bis 6, dadurch gekennzeichnet, daß die Schmutzteilchen durch den im Ausgangsraum (15) herrschenden und durch den Schmutzfilter (9) hindurch an der Rückspülöffnung (30) wirksamen Lösungsmitteldruck abgeführt werden, zweckmäßigerweise indem eine Drosselstelle (45) im Lösungsmittelauslaß oder anschließend an diesen angeordnet ist.

8. Reinigungsanlage nach einem der Ansprüche 1 bis 7, dadurchgekennzeichnet, daß zum Entfernen des getrockneten Filtrats die Schmutzfilteroberseite absaugbar ist, zweckmäßigerweise über die Rückspüleinrichtung (28), von deren Rückspülleitung (31) hierzu eine an eine Saugeinrichtung (72) angeschlossene Saugleitung (57) abzweigt.

9. Reinigungsanlage nach einem der Ansprüche 1 bis 8, dadurch gekennzeichnet, daß der Schmutzfilter (9) eine Filterplatte aus gesintertem Material, zweckmäßigerweise aus gesintertem Metall, ist, wobei zweckmäßigerweise die Porengröße in Strömungsrichtung des Lösungsmittels abnimmt.

10. Reinigungsanlage nach einem der Ansprüche 1 bis 9, dadurch gekennzeichnet, daß im Eingangsraum (14) und/oder im Ausgangsraum (15) der Schmutzfiltereinrichtung eine Heizeinrichtung (46 und/oder 47) angeordnet ist.

11. Reinigungsanlage nach Anspruch 10, dadurch gekennzeichnet, daß die Heizeinrichtung (46 und/oder 47) eine Mikrowellen-Heizeinrichtung ist.

12. Reinigungsanlage nach einem der Ansprüche 1 bis 11, dadurch gekennzeichnet, daß der Schmutzfilter (9b) auf einer aufheizbaren Unterlagsplatte (68) aufliegt, die an ihrer dem Filter (9b) zugewandten Oberseite Strömungsnuten (69) od. dgl. enthält, die mit einer zum Auslaß hin offenen Ausnehmung (70) der Unterlagsplatte verbunden sind.

13. Reinigungsanlage nach einem der Ansprüche 1 bis 12, dadurch gekennzeichnet, daß sie einen mit dem Filtergehäuse (13) abtrennbar verbundenen, eine Eingabe- und Entnahmeöffnung aufweisenden Trocknungsbehälter zur Aufnahme von durch anhaftendes Lösungsmittel feuchten Gegenständen wie Flusen, Lappen usw. enthält.

14. Reinigungsanlage nach einem der Ansprüche 1 bis 13, dadurch gekennzeichnet, daß die Schmutzfiltereinrichtung (8) vom Filterbetrieb, bei dem das Lösungsmittel durchströmt, auf Destillierbetrieb umstellbar und dabei mittels der Heizeinrichtung (46 und/oder 47) als Destillierapparat betreibbar ist, wobei das Filtergehäuseinnere (14) den Destillierraum bildet und über eine Destillierleitung (49) mit einem Kondensator (51) verbunden ist, in dem der durch die Destillierleitung ankommende Lösungsmitteldampf kondensiert.

15. Verfahren zum Betreiben der Reinigungsanlage nach Anspruch 14, dadurch gekennzeichnet, daß die Schmutzfiltereinrichtung (8) bei stillstehender Reinigungsanlage oder während der Kleidertrocknung auf Destillierbetrieb umgestellt und die Heizeinrichtung (46 und/oder 47) eingeschaltet wird, wonach, wenn das im Filtergehäuse enthaltene Lösungsmittel destilliert ist, bei eingeschalteter Heizeinrichtung das auf dem Schmutzfilter befindliche Filtrat getrocknet wird, beispielsweise indem man zunächst aus dem durch den Aufnahmeraum (3) zur Kleidertrocknung gehenden Warmluftkreislauf der Reinigungsanlage Warmluft abzweigt und durch die Schmutzfiltereinrichtung (8) hindurch und dann zurück in den Warmluftkreislauf leitet und anschließend Frischluft durchströmen läßt, und daß man anschließend das getrocknete Filtrat von der Filteroberfläche absaugt.

## Revendications

1. Installation pour le nettoyage chimique d'objets en tissu, et en particulier de vêtements, comprenant une chambre de traitement qui est constituée par exemple par un tambour tournant, qui est reliée à un circuit de solvant comprenant un dispositif de circulation du solvant et un dispositif de filtrage des saletés, cependant que l'enveloppe du dispositif de filtrage des saletés comprend un volume d'entrée muni d'une entrée de solvant et un volume de sortie muni d'une sortie de solvant, et, entre ceux-ci sur le trajet de l'écoulement, un filtre à saletés présentant une forme plane, et que, pour sécher les résidus de filtrage, l'amenée de solvant étant coupée, on peut faire traverser le filtre à saletés par de l'air au moyen d'un dispositif qui fait circuler l'air du volume d'entrée au volume de sortie, caractérisée par le fait qu'est disposé dans le volume d'entrée (14) un dispositif de lavage à contre-courant (28) comprenant au moins un organe de lavage à contre-courant (29) qui peut être posé sur la face supérieure du filtre à saletés, qui, lorsqu'il est ainsi posé, est étanche par rapport au volume d'entrée (14), qui peut être déplacé au-dessus du filtre à saletés (9), et qui comporte, sur sa face inférieure tournée vers le filtre à saletés (9), une ouverture de lavage à contre-courant (30) par laquelle sont évacuées les particules de saleté qui se déposent sur le filtre à saletés (9) lors de l'écoulement du solvant et qui reviennent dans le circuit du solvant par une conduite de lavage à contre-courant (31) reliée à l'ouverture de lavage à contre-courant (30), et par le fait que le dispositif de filtrage des saletés (8) contient un dispositif de chauffage (46, 47).

2. Installation de nettoyage selon la revendication 1, caractérisée par le fait que l'organe de lavage à contre-courant au moins (29) peut tourner autour d'un axe (31) disposé perpendiculairement au plan du filtre et qu'il peut être aussi levé et abaissé, de telle manière que l'organe de lavage à contre-courant (29), pour changer sa position sur le filtre à saletés (9), est tout d'abord soulevé, puis tourné, et abaissé ensuite à nouveau.

3. Installation de nettoyage selon la revendication 2, caractérisée par le fait que, pour lever l'organe de lavage à contre-courant du filtre à saletés (9), le volume intérieur de l'organe de lavage à contre-courant au moins (29) peut être soumis à la pression qui règne dans le volume d'entrée (14), en synchronisme avec le déplacement de l'organe de lavage à contre-courant.

4. Installation de nettoyage selon l'une des revendications 1 à 3, caractérisée par le fait que, sur la face inférieure de chaque organe de lavage à contre-courant (29), est présente une garniture d'étanchéité (35), de préférence un joint d'étanchéité, qui entoure l'ouverture de lavage à contre-courant (30) et par l'intermédiaire de laquelle l'organe de lavage à contre-courant (29) repose sur le filtre à saletés (9).

5. Installation de nettoyage selon l'une des revendications 2 à 4, caractérisée par le fait que l'axe (33) est constitué par un tube de lavage à contre-courant (34) qui est monté tournant au centre de l'enveloppe (13) du filtre, auquel est fixé latéralement l'organe de lavage à contre-courant au moins (29), et dont le volume intérieur tubulaire (36) est relié à l'ouverture de lavage à contre-courant (30), de sorte que l'évacuation des particules de saleté a lieu par le tube de lavage à contre-courant (34).

6. Installation de nettoyage selon la revendication 5, caractérisée par le fait que le tube de lavage à contre-courant (34) est monté tournant dans une tubulure (40) montée sur l'enveloppe (13) du filtre, cependant qu'entre la tubulure et le tube de lavage à contre-courant est présent un espace annulaire (41) qui est étanche par rapport à l'extérieur et au volume d'entrée (14), et qui est relié, d'une part, au volume intérieur (36) du tube de lavage à contre-courant par au moins une ouverture (44) ménagée dans ce tube, et, d'autre part, à la conduite de lavage à contrecourant (31) par un raccordement disposé sur la tubulure.

7. Installation de nettoyage selon l'une des revendications 1 à 6, caractérisée par le fait que les particules de saleté sont évacuées grâce à la pression de solvant qui règne dans le volume de sortie (15) et qui agit à travers le filtre à saletés (9) sur l'ouverture de lavage à contre-courant (30), avantageusement du fait qu'un endroit étranglé (45) est disposé dans la sortie du solvant ou à la suite de celle-ci.

8. Installation de nettoyage selon l'une des revendications 1 à 7, caractérisée par le fait que, pour enlever les résidus de filtrage séchés, la face supérieure du filtre à saletés (9) peut être soumise à une aspiration, avantageusement par le dispositif de lavage à contre-courant (28) dont la conduite de lavage à contre-courant (31) bifurque à cette fin vers une conduite d'aspiration (57) reliée à un dispositif d'aspiration (72).

9. Installation de nettoyage selon l'une des revendications 1 à 8, caractérisée par le fait que le filtre à saletés (9) est une plaque de filtrage en matériau fritté, avantageusement en métal fritté, la dimension des pores diminuant avantageusement dans la direction de l'écoulement du solvant.

10. Installation de nettoyage selon l'une des revendications 1 à 9, caractérisée par le fait qu'un dispositif de chauffage (46 et/ou 47) est disposé dans le volume d'entrée (14) et/ou dans le volume de sortie (15) du dispositif de filtrage des saletés.

11. Installation de nettoyage selon la revendication 10, caractérisée par le fait que le dispositif de chauffage (46 et/ou 47) est un dispositif de chauffage à micro-ondes.

12. Installation de nettoyage selon l'une des revendications 1 à 11, caractérisée par le fait que le filtre à saletés (9b) repose sur une plaque d'assise (68) qui peut être chauffée et qui présente sur sa face inférieure tournée vers le filtre (9b) des rainures d'écoulement (69) ou similaires, lesquelles sont reliées à un évidement (70) de la plaque d'assise qui est ouvert vers la sortie.

13. Installation de nettoyage selon l'une des revendications 1 à 12, caractérisée par le fait qu'elle comprend un récipient de séchage qui est relié de manière amovible à l'enveloppe (13) du filtre, qui comporte une ouverture d'introduction et d'enlèvement et qui est destiné à recevoir des objets rendus humides par du solvant qui y adhère, comme des peluches, des chiffons, etc.

14. Installation de nettoyage selon l'une des revendications 1 à 13, caractérisée par le fait que l'on peut faire passer le dispositif de filtrage des saletés (8) du mode de fonctionnement en filtrage où le solvant le traverse, au mode de fonctionnement en distillation où il peut fonctionner comme un appareil de distillation au moyen du dispositif de chauffage (46 et/ou 47), cependant que l'intérieur (14) de l'enveloppe du filtre constitue la chambre de distillation et qu'il est relié par une conduite de distillation (49) à un condenseur (51) dans lequel se condense la vapeur de solvant provenant de la conduite de distillation.

15. Procédé pour faire fonctionner l'installation de nettoyage selon la revendication 14, caractérisé par le fait que l'on fait passer le dispositif de filtrage des saletés (8) au mode de fonctionnement en distillation alors que l'installation de nettoyage est arrêtée ou pendant le séchage des vêtements, et que l'on met en marche le dispositif de chauffage (46 et/ou 47), après quoi, lorsque le solvant contenu dans l'enveloppe du filtre est distillé, on sèche les résidus de filtrage qui se trouvent sur le filtre à saletés, le dispositif de chauffage étant en marche, par exemple du fait que l'on dévie tout d'abord de lair chaud du circuit d'air chaud de l'installation de nettoyage qui va vers le séchage des vêtements à travers la chambre réceptrice (3), qu'on lui fait traverser le dispositif de filtrage des saletés (8) et qu'on le ramène dans le circuit d'air chaud, et qu'on fait passer par la suite de l'air frais, et par le fait que l'on aspire ensuite les résidus de filtrage séchés depuis la surface du filtre.

**Claims**

1. Purification plant for the chemical cleaning of objects made of fabric, for example clothing, with a treatment chamber formed for example of a rotatable cylinder connected to a solvent cycle comprising a solvent conveying device and a dirt filtering device, whereby the housing of the dirt filtering device has an entrance chamber with a solvent inlet and an exit chamber with a solvent outlet and has in the flow path in between a dirt filter having a flat form and whereby for the drying of the filtrate in the case of the separate conveyance of solvent the dirt filter can be perfused with air from the entrance chamber to the exit chamber by means of an air conveying device, characterised in that a back flush device (28) is arranged in the entrance chamber (14), said device having at least one back flush body (29) which can be mounted on the upper side of the dirt filter, and when so mounted is tight against the entrance chamber (14) and movable by means of the dirt filter (9), said back flush body having, on its underside directed towards the dirt filter (9), a back flush opening (30) via which, during the flow of the solvent, particles of dirt settling on the dirt filter (9) are removed which get back into the solvent cycle via a a back flush duct (31) connected with the back flush opening (30) and in that the dirt filtering device (8) comprises a heating device (46, 47).

2. Purification plant according to Claim 1, characterised in that the at least one back flush body (29) is rotatable about an axis (33) at right angles to the filter plane and raisable and lowerable in the axial direction in such a way that the back flush body (29), in order to change position on the dirt filter (9) is first raised and then turned and lowered again.

3. Purification plant according to Claim 2, characterised in that the interior of the àt least one back flush body (29) can, in order to raise the back flush body from the dirt filter (9), be impacted with the pressure present in the entrance chamber (14) in time with the movement of the back flush body.

4. Purification plant according to one of Claims 1 to 3, characterised in that on the underside of each back flush body (29) a seal (35), preferably a sealing ring, surrounding the back flush opening (30) is provided, by means of which the back flush body (29) rests on the dirt filter (9).

5. Purification plant according to one of Claims 2 to 4, characterised in that the axis (33) is formed by a back flush pipe (34) mounted centrally on the filter housing (13), on which the at least one back flush body (29) is laterally secured and the pipe interior (36) of which is connected with the back flush opening (30) so that the particles of dirt are removed via the back flush pipe (34).

6. Purification plant according to Claim 5, characterised in that the back flush pipe (34) is mounted in a pipe socket (40) arranged on the filter housing (13), whereby between the pipe socket and the back flush pipe an annular chamber (41) sealed towards the entrance chamber (14) and towards the outside is provided which is connected on the one hand by means of at least one pipe opening (44) of the back flush pipe with the interior (36) of the latter and on the other hand by means of a connection arranged on the pipe socket with the back flush duct (31).

7. Purification plant according to one of Claims 1 to 6, characterised in that the particles of dirt are removed through the solvent pressure present in the exit chamber (15) and effective on the back flush opening (30) through the dirt filter (9), a throttle station (45) preferably being arranged in the solvent outlet or adjacent to the latter.

8. Purification plant according to one of Claims 1 to 7, characterised in that in order to remove the dried filtrate the upper side of the dirt filter can be sucked off, preferably by means of the back flush device (28) from the back flush duct (31) of which a suction pipe (57) attached to a suction device (72) branches off for this purpose.

9. Purification plant according to one of Claims 1 to 8, characterised in that the dirt filter (9) is preferably a filter plate made of sintered material, preferably of sintered metal, whereby preferably the size of the pores decreases in the direction of flow of the solvent.

10. Purification plant according to one of Claims 1 to 9, characterised in that a heating device (46 and/or 47) is arranged in the entrance chamber (14) and/or in the exit chamber (15) of the dirt filtering device.

II. Purification plant according to Claim 10, characterised in that the heating device (46 and/or 47) is a microwave heating device.

12. Purification plant according to one of Claims 1 to II, characterised in that the dirt filter (9b) rests on a heatable tie plate (68) which has flow grooves (69) or the like on its upper side directed' towards the filter (9b), said flow grooves being connected with a recess (70) of the tie plate open towards the outlet.

13. Purification plant according to one of Claims 1 to 12, characterised in that it has a drying container removably connected with the filter housing (13), having an input and withdrawal opening, for receiving objects such as fluff, rags etc. damp from solvent clinging to them.

14. Purification plant according to one of Claims 1 to 13, characterised in that the dirt filtering device (8) can be switched from the filtering function, where the solvent flows through, to the distilling function whereby it is operable as a distilling device by means of the heating device (46 and/or 47), the inside (14) of the filter housing forming the distilling chamber and being connected by means of a distilling duct (49) with a condenser (51) in which the solvent steam arriving through the distilling duct condenses.

15. Method for operating the purification plant according to claim 14, characterised in that the dirt filtering device (8), in the case of the purification plant being at a standstill or during the drying of the clothing, is switched to the distilling function and the heating device (46 and/or 47) switched on, according to which, when the solvent contained in the filter housing is distilled, in the case of the heating device being switched on, the filtrate on the dirt filter is dried, for example by first branching warm air out of the the warm air cycle of the purification plant going through the absorption chamber (3) for drying clothes and leading it through the dirt filtering device (8) and then back into the warm air cycle and then letting fresh air flow through it, and subsequently sucking the dried filtrate from the upper surface of the filter.

Fig.1

Fig. 2

Fig. 3

2

Fig. 4

Fig. 5

Fig. 6a

Fig. 6b

Fig. 6c